# EUROPEAN PATENT APPLICATION

(11) **EP 0 762 047 A1**
(43) Date of publication of application: **12.03.1997**
(21) Application number: 95114333.8
(22) Date of filing: 12.09.1995
(51) Int. Cl.: F21L 13/08, H02K 7/18

(54) **Traction power-driven power generator**

(71) Applicant: Wang, Ching-Yuan, Taipei (TW)
(72) Inventor: Fang, Jason, TW-Taipei (TW)
(74) Representative: Weise, Reinhard, Dipl.-Ing.

(57) **Abstract**

A traction power-driven power generator including a power drive driven by a traction cable (2), an one-way rotary transmission mechanism coupled to the power drive, a power generating device (6) driven by the power drive through the one-way rotary transmission mechanism to generate electricity, and a casing (1), which holds the power drive, the one-way rotary transmission mechanism, and the power generating device (6) on the inside.

## Description

### BACKGROUND OF THE INVENTION

The present invention relates to traction power-driven power generator which is driven by a traction cable through an one-way rotary transmission mechanism to generate electricity.

Various methods have been developed and used for generating electricity. These methods include thermo-power generation, hydraulic power generation, nuclear power generation, etc. Hydraulic power generation uses potential energy of water to turn a power generator. This method is an application of natural resources which causes little pollution to the nature. Thermo-power generation is to obtain heat energy from the burning of fuel oil, coal, etc., and then to convert heat energy into electricity. Nuclear power generation is to convert nuclear power into electric energy. Building a nuclear power plant is not an easy job. If case of a leakage of the radiation of nuclear, a catastrophe may occur. Both thermo-power generation and nuclear power generation will cause unfavorable effects to the environment and the human race. Therefore, people have been continuously trying to develop different power generating methods which do not cause pollutions to the environment. "DYNAMO FOR/ON BICYCLE" of U.S. Pat. No. 5,015,869, issued on May 14, 1991, is a small power generating device mounted on the wheel axle of a bicycle and turned to generate electricity when the bicycle is moving. This device generates electricity only when the bicycle runs. "MANUALLY DRIVEN GENERATING MECHANISM FOR DOORBELLS" of U.S. patent no. 4,354,448 teaches another power generation method. This manually driven generating mechanism comprises a toothed press button, an accelerating gear train coupled to the toothed press button, a spring member for pushing the press button back to its former position after each press, and a power generating device having its rotor coupled to the accelerating gear train. When the press button is continuously depressed and released, the rotor of the generating device is alternatively rotated forward and backward. Because the rotor of the power generating device is alternatively rotated forward and backward, and the revolving speeds of the forward rotation and backward rotation of the rotor may different, the voltage and current of the electricity generated by the power generating device are unstable. Therefore, this structure of power generating device can only be used for doorbells and the like.

### SUMMARY OF THE INVENTION

The present invention has been accomplished to provide a traction power-driven power generator which turns the rotor of the power generating device in one direction to produce stable electric energy.

According to the present invention, the traction power-driven power generator comprises a power drive driven by a traction cable, an one-way rotary transmission mechanism coupled to the power drive, and a power generating unit driven by the power drive through the one-way rotary transmission mechanism to generate electricity. Because the rotor of the power generating device is continuously turned in one direction by the one-way rotary transmission mechanism, the output electric energy of the power generating device is stable and can be used for torch lamps and other personal electric apparatus.

### BRIEF DESCRIPTION OF THE DRAWINGS

Fig. 1 is an elevational view of a traction power-driven power generator according to the present invention;
Fig. 2 is a side view in section of the traction power-driven power generator shown in Figure 1;
Fig. 3 is a sectional view taken along line III-III of Figure 2;
Fig. 4A is a sectional view taken along line IVA-IVA of Figure 2; and
Fig. 4B is an enlarged view of a part of Figure 4A showing the movement of the friction roller in the sloping side notch of the cylindrical block.

### DETAILED DESCRIPTION OF THE PREFERRED EMBODIMENT

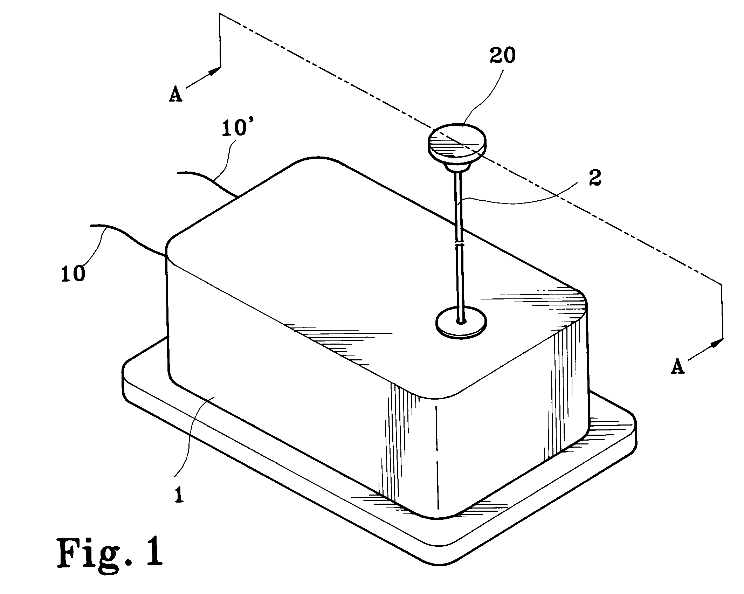

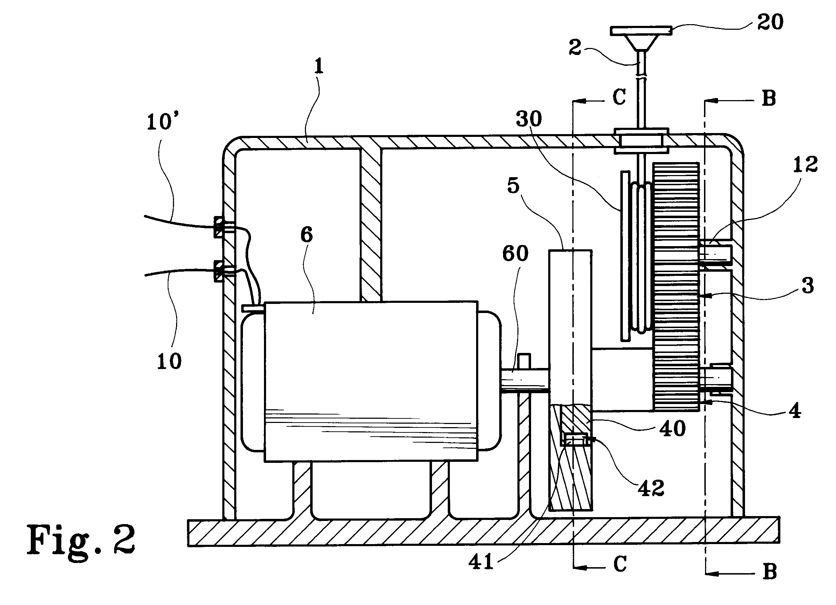

Referring to Figures 1 and 2, the casing, referenced by 1, is made of rectangular shape having two terminals 10 and 10' at one end. A traction cable 2 is extended out of the top side of the casing 1 and coupled to a pull ring 20 for driving a power drive, which is comprised of two meshed gears, namely, the driving gear 3 and the driven gear 4, and a cable reel 30. The power drive is driven by the traction cable 2 to turn an one-way rotary transmission mechanism, which is comprised of a cylindrical block 40 and a hollow follower wheel 5. The follower wheel 5 is coupled to the rotor 60 of a power generating device 6. The output electric energy of the power generating device 6 is connected to an external electric device through the terminals 10 and 10'.

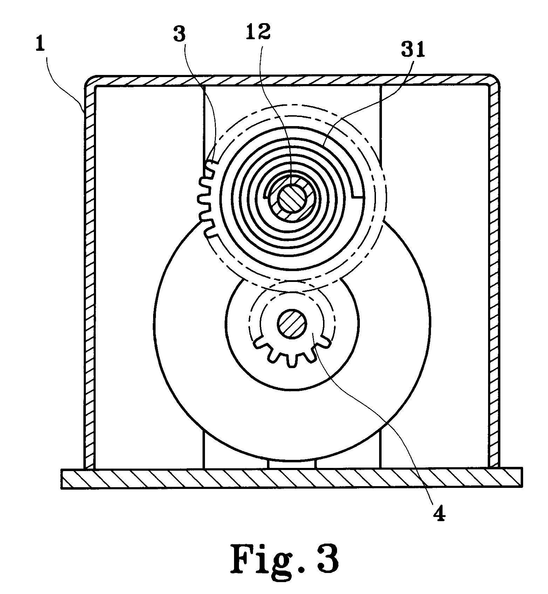

Referring to Figure 3, the traction cable 2 is wound round the cable reel 30. The cable reel 30 is fixedly connected to the driving gear 3. When the traction cable 2 is pulled to rotate the cable reel 30, the driving gear 3 is driven to turn the driven gear 4. A spiral spring 31 is mounted within the driving gear 3, having one end fixedly secured to the driving gear 3 and an opposite end connected to an axle hole 12 on the casing 1. When the traction cable 2 is pulled to rotate the cable reel 30, the spiral spring 31 is wound up to preserve energy. When the traction cable 2 is released, the spiral spring 31 forces the driving gear 3 to rotate in the reversed direction and to simultaneously take up the traction cable 2. The gears 3 and 4 are an accelerating gear train. Therefore, the revolving speed of the driven gear 4 is higher than that of the driving gear 3.

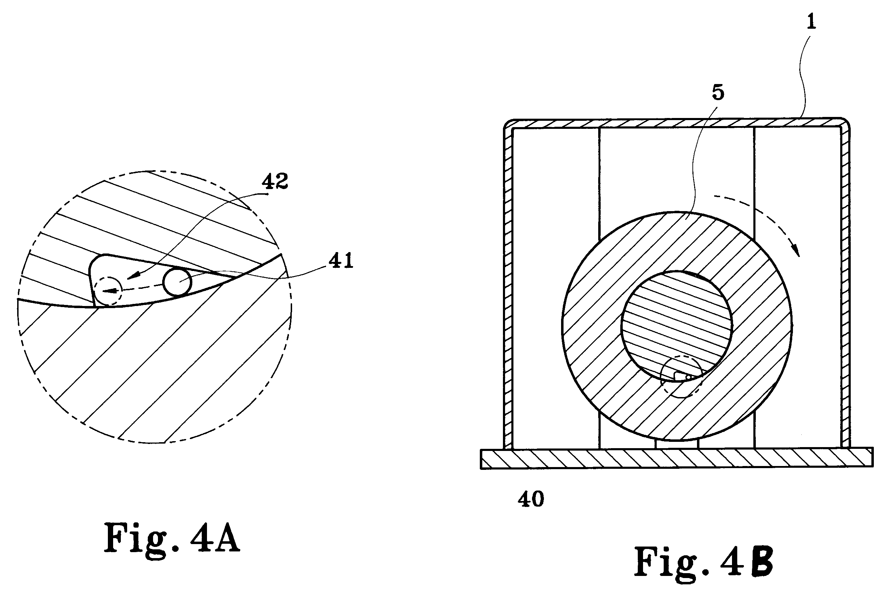

Referring to Figures 4A and 4B and Figure 2 again, the cylindrical block 40 is mounted within the hollow follower wheel 5, having a sloping side notch 42 around the periphery. A friction roller 41 is moved in the sloping side notch 42 within the hollow follower wheel 5. The cylindrical block 40 is coupled to the gear shaft of the driven gear 4. When the cylindrical block 40 is rotated by the driven gear 4 clockwise (see Figure 4A), the friction roller 41 is forced by centrifugal force into engagement between the cylindrical block 40 and the hollow follower wheel 5, causing the hollow follower wheel 5 to be rotated by the cylindrical block 40. When the cylindrical block 40 is rotated by the driven gear 4 counter-clockwise (see Figure 4B), the friction roller 41 is forced by centrifugal force to an opposite end of the sloping side notch 42 to disengage the hollow follower wheel 5 from the cylindrical block 40. Therefore, continuously pulling and releasing the traction cable 2 causes the hollow follower wheel 5 to continuously turn the rotor 60 of the power generating device 6 in one direction, and therefore the power generating device 6 is continuously operated to generate electricity.

As indicated, when the traction cable 20 is continuously pulled, the rotor 60 of the power generating device 6 is continuously rotated in one direction to produce electric energy. The capacity of the power generating device 6 has great concern with its winding and magnetic line of force. The output electric energy of the power generating device 6 is also directly proportional to the revolving speed of the rotor 60. The arrangement of the one-way rotary transmission mechanism keeps the rotor 60 of the power generating device 6 to be continuously rotated in one direction, therefore the output electric energy of the power generating device 6 is stable.

## Claims

1. A traction power-driven power generator comprising a casing (1), a power drive mounted inside said casing (1), a power generating device (6) mounted inside said casing (1), an one-way rotary transmission mechanism mounted inside said casing (1) and driven by said power drive to turn said power generating device (6), said power generating device (6) having a rotor (60) coupled to said one-way rotary transmission mechanism and two power output terminals (10,10') disposed outside said casing (1), characterized in that:
said power drive (6) comprises a cable reel (30) mounted inside said casing (1), a traction cable (2) having a fixed end wound round said cable reel (30) and a free end (20) extended out of said casing (1), a gear train mounted inside said casing (1) and coupled to said cable reel (30), said cable reel (30) being rotated to turn said gear train when said traction cable (2) is pulled out of said casing (1), and a spiral spring (31), said spiral spring (31) being wound up to preserve energy when said traction cable (2) is pulled out of said casing (1) to rotate said cable reel (30), said spiral spring (31) forcing said cable reel (30) to take up said traction cable (2) when said traction cable (2) is released; said one-way rotary transmission mechanism comprises a hollow follower wheel (5) coupled to the rotor (60) of said power generating device (6), a cylindrical block (40) mounted within said hollow follower wheel (5) and coupled to said gear train and having a sloping side notch (42), and a friction roller (41) moved in said sloping side notch (42) within said hollow follower wheel (5), said friction roller (41) being moved to one end of said sloping side notch (42) to connect said cylindrical block (40) to said hollow follower wheel (5) when said cylindrical block (40) is turned by said gear train clockwise, said friction roller (41) being moved to an opposite end of said sloping side notch (42) to disconnect said cylindrical block (40) from said hollow follower wheel (5) when said cylindrical block (40) is turned by said gear train counter-clockwise.

2. The traction power-driven power generator of claim 1 characterized in that:
the free end (20) of said traction cable (2) is mounted with a pull ring outside said casing (1) for pulling by hand.

3. The traction power-driven power generator of claim 1 characterized in that :
said gear train comprises a driving gear (3) fixedly mounted around said cable reel (30) at one end, and a driven gear (4) meshed with said driving gear (3) and coupled to one end of said cylindrical block (40).

4. The traction power-driven power generator of claim 1 characterized in that:
said gear train is an accelerating gear train.
